Europäisches Patentamt

(19) European Patent Office

Office européen des brevets

(11) Publication number: **0 000 643**

A2

(12) # EUROPEAN PATENT APPLICATION

(21) Application number: **78300166.2**

(22) Date of filing: **19.07.78**

(51) Int. Cl.²: **B 29 C 27/02**

(30) Priority: **22.07.77 GB 30959/77**

(43) Date of publication of application:
**07.02.79 Bulletin 79/3**

(84) Designated contracting states:
**BE CH DE FR GB NL SE**

(71) Applicant: **DRG (UK) LIMITED**
**1 Redcliffe Street**
**Bristol, BS99 7QY. (GB)**

(72) Inventor: **Bartlett, John Reginald**
**Keg Cottage Hinton Charterhouse Bath**
**Avon. (GB)**

(72) Inventor: **Rusling, Eric John**
**114 Radnor Road Horfield,**
**Bristol. (GB)**

(72) Inventor: **Hollenberg, Peter**
**The Red House Broxwood Pembridge Leominster**
**Shropshire. (GB)**

(74) Representative: **Armitage, Ian Michael et al**
**MEWBURN ELLIS & CO.**
**70/72 Chancery Lane**
**London WC2A 1AD. (GB)**

(54) Seaming plastics materials.

(57) A method of seaming together the edges of plastics sheet (10) by bringing them towards each other, leaving a small gap, and introducing a plastics strip (26) into the groove thus formed. The strip can be directly extruded into the groove so that it welds directly to the sheet edges. Alternatively, external heat may be applied, for example by a hot air jet just before the strip enters the groove, so that the strip welds to the sheet edges. The sheet, and possibly also the strip may comprise foamed plastics material. The seam thus formed can be rolled before the material has cooled so as to produce a flush joint.

This method can be used to produce tubular plastics bodies for making into containers. Also disclosed is a method of fitting a metal end closure in which an outward flange on the closure is turned around the outside of the foamed plastics body and engages under an outward shoulder at the rim of the body forming a circumferential seam, the material of the body being compressed between the flange and an upstanding annular wall of the end closure. An alternative method of producing a flush seam between plastics sheets comprises reducing the thickness of the edge portions of the sheets and then overlapping these portions and sealing them together. The reduced thickness areas preferably have complementary profiles.

0000643

1.

## SEAMING PLASTICS MATERIALS

This invention relates to seaming plastics materials and more particularly to seaming plastics material either to itself or to a metal member to form a container.

It is known to form composite can-like containers from a body of plastics material and top and bottom end members of metal material. When seaming a metal end member to a plastics body to form a can a problem may be encountered if the tubular body is formed from a sheet and has a longitudinal seam therein, in that it may not be possible properly to turn down the peripheral portion of the end member against the body in the region of the longitudinal seam to obtain a good seal between the end member and the body. This difficulty arises if the longitudinal seam has an appreciably greater thickness than the rest of the body. Conventional methods of forming a longitudinal seam between two opposing edges of a sheet to form a tubular body involve turning the edges about themselves. The seam thus comprises several layers of the sheet material.

According to one aspect of the present invention there is provided a method of seaming together two edge portions of plastics sheet material, comprising bringing the edge portions towards each other substantially edge-to-edge but with a small gap between them, applying a strip of a compatible plastics material in the groove thus formed between the edges, the strip being heated sufficiently to produce a weld between the edge portions and the strip. The edge portions may be at opposing edges of a single sheet, so that a tube is formed when the edge portions are joined. Preferably, the thickness of the two edge portions is reduced prior to applying the strip, the strip extending over the areas of reduced thickness. Suitably the edge portions may be reduced in thickness by chamfering. Preferably at least the sheet material comprises a foamed plastics material. Heat may be provided to the joint by extruding the strip directly into the groove, the heat coming from the freshly extruded material. Alternatively, heat may be applied to both the strip and the edge portions by directing a jet of hot gas towards the joint as the strip moves towards the groove. The hot gas may be air, but to prevent oxidation of the plastics material and thus ensure a weld of good strength, the hot gas is preferably an inert gas, e.g. nitrogen. The joint can be formed by a continuous process wherein the strip is laid longitudinally along the joint at a given point past which the strip and the edge portions are advanced. The jet of hot gas can then be directed between the strip and the edge portions at the given point. Preferably pressure is applied to the joint after formation of the seam but while the material is still hot so as to provide a substantially flush seam.

When it is desired to make a can with a tubular body of foamed plastics material, problems arise in fitting the metal end closure partly because of the thickness of the foamed material and partly because of its physical properties. When a metal can end is seamed to a metal body, the end of the body is first swaged outwardly to form a flange, the end member is turned over this flange and a peripheral portion of the end member is turned round the flange. The flange and peripheral portion of the end member are then turned down and pressed against the body. When this is attempted with a foamed plastics body however, it has been found that this material does not lend itself to being formed easily by conventional can manufacturing methods.

According to a second aspect of the present invention there is provided a method of forming a can from a tubular body of sheet material, in which an end member having an upstanding annular wall and an out-turned annular flange extending from the edge of the wall is placed over the end of the tubular body so that the upstanding wall fits closely within the tubular body, and turning the annular flange around the outside of the body to form a circumferential seam, characterised in that the tubular body comprises a foamed plastics material which is not turned with the flange of the end member and said flange is turned so as to be retained behind a shoulder formed in the outside surface of the end portion of the body. The sheet material may consist only of foamed plastics, or it may be a laminate with other plastics or with metal foil or both. The method may include the initial step of forming a circumferential bead at said end portion of the body, the peripheral flange being retained behind the shoulder provided by the bead when the circumferential seam is formed. Preferably the periphery is turned back on the peripheral portion to form a hem which lies against the body when the circumferential seam is formed. The hem compresses the material of the body when the circumferential seam is formed, thereby forming a retaining shoulder in the material in addition to that provided by the outwardly directed bead, or instead of it if there is no outwardly

4.

directed bead. The face of the peripheral portion of the end member which is nearest the end of the body when the seam is formed may be initially coated with a gasket of resinous material to fill any voids between the peripheral portion of the end member and the end portion of the body when the circumferential seam is formed, and to seal the seam. The method can be used to join two opposing end members to the body.

According to a third aspect of the invention there is provided a method of seaming together two edge portions of plastics sheet material, comprising reducing the thickness of one edge portion on one side thereof, laying the other edge portion over the reduced edge portion and sealing them together. Preferably the thickness of the other edge portion is reduced on an opposing side thereof in order to produce a seam flush with the sheet material. If desired, at least one matching corrugation is formed in each said side as or when it is reduced, one said side is laid over the other, and heat is applied to the edge portion to weld said sides together. Preferably the plastics material is foamed. Preferably the steps of reducing the thickness and forming a corrugation in each edge portion are performed together by rolling the edge portion with a roller having a profile of the desired corrugated configuration. The edge portions may be at opposing edges of a single sheet, so that a tube is formed when said sides are laid over each other.

Cans made using any of the preceding methods are also included within the scope of this invention. Such cans may have metal end members as described, or in some aspects of the invention the end members may be of plastics material sealed to the body.

Preferred methods and cans according to the invention will now be described by way of example with reference to the accompanying drawings, wherein:

Fig. 1 is a cross-section of part of a tubular body showing a longitudinal seam,

Figs. 2 and 3 show schematically a method of forming the longitudinal seam of Fig. 1, Fig. 3 being a cross-section along the line III-III in Fig. 1, and Fig. 1 being a cross-section along the line I-I in Fig. 3,

Fig. 4 is a cross-section of parts of a tubular body and an end member during construction,

Fig. 5 is a cross-section of the same parts as Fig. 4 after assembly,

Fig. 6 shows a modification of the construction of Fig. 5,

Fig. 7 shows a further method of forming a longitudinal seam, and

Fig. 8 shows a cross-section of a tubular body having a longitudinal seam formed as in Fig. 7, the seam being shown in detail.

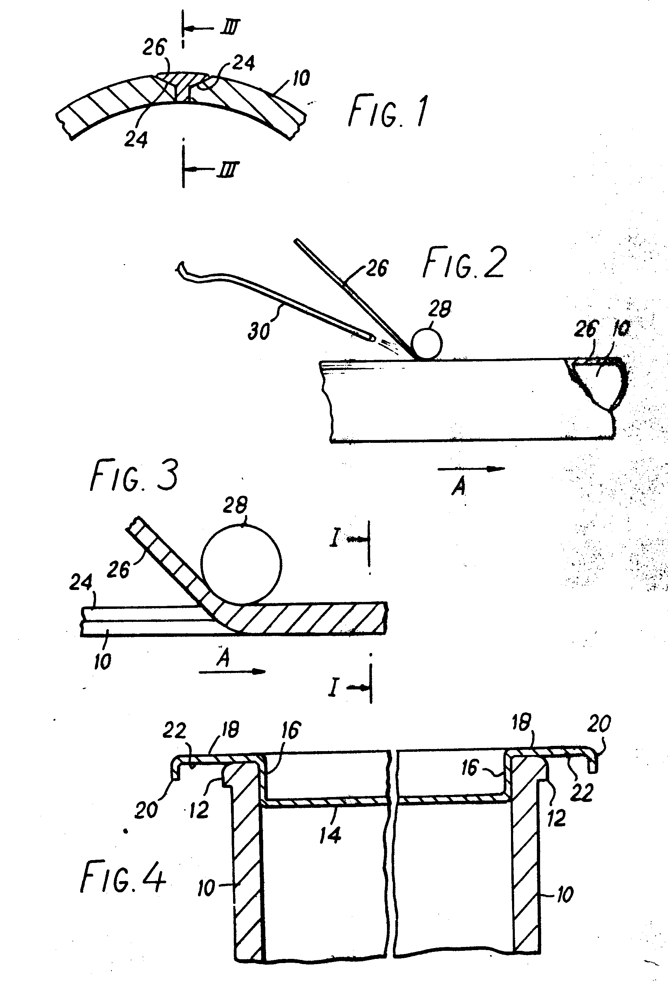

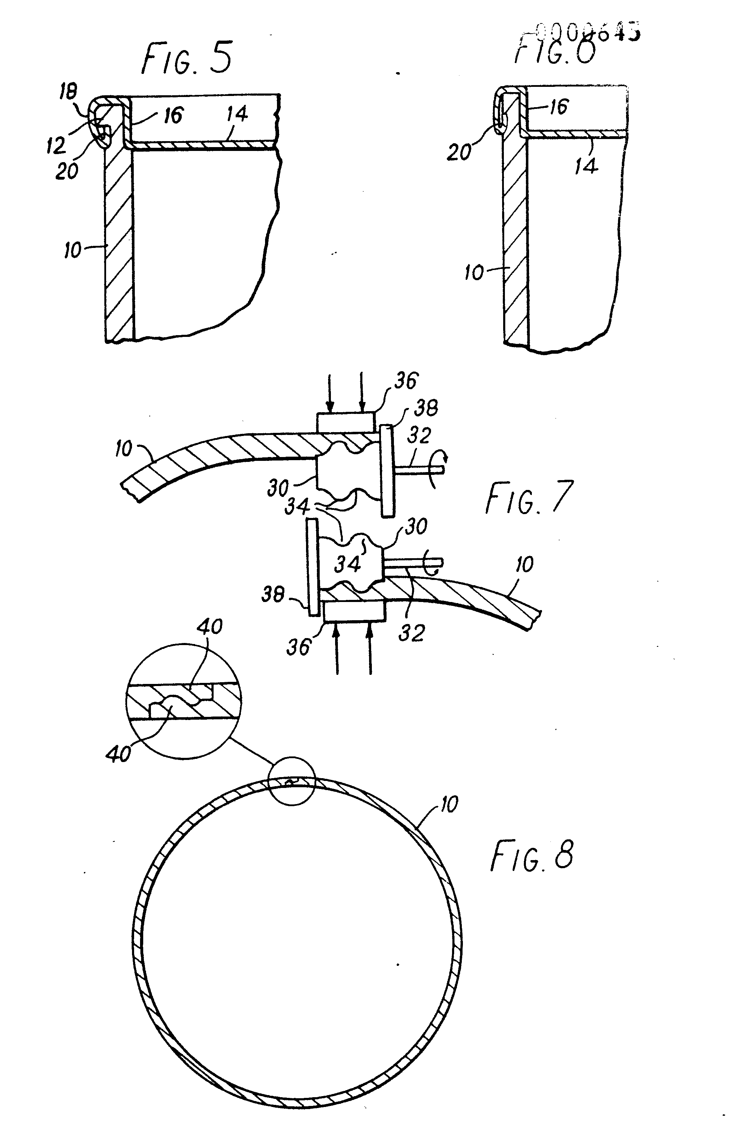

A preferred method of forming tubular bodies 10 with a longitudinal seam is illustrated in Figs. 1 to 3. A long tube of foamed plastics material is formed by progressively bringing towards each other the opposing edges of a long web of material. Alternatively tubes may be similarly formed individually in blanks of one or several can length of foamed material. Before being brought together, however, the edge portions may be reduced in thickness by chamfering, as seen in Fig. 1. The chamfering can either be by removal of material, or by passing the edge portions between rollers to compress the material. When brought towards each other so that they almost touch, the chamfered edge portions 24 form a Y-shaped groove into which is laid a strip 26 which may be of the same plastics material as the tube or a material which is compatible therewith. As seen in Figs. 2 and 3, when a long tube is being formed in a continuous process, the strip 26 is laid in the groove continuously as the strip 26 and the tube 10 are progressed past a roll 28 in the direction of arrow A. A jet 30 of hot nitrogen is directed towards the point at which the strip 26 is laid in the Y-shaped groove, and the heat of this jet welds together the strip 26 and the chamfered edges 24. Pressure is applied by the roller 28 to the joint thus formed, a counter-abutment to the roller being provided by a mandrel (not shown) within the tube 10. The strip 26 is originally rectangular in cross-section, but the combination of heat and pressure causes it to fill the Y-shaped groove without appreciably increasing the thickness of the seam. If the strip is of foamed material there may be some degree of collapse of the foamed material of the strip to assist this. The strip 26 can be of a non-foamed material if desired. Such material may be directly extruded into the groove, the heat of the molten material serving to weld it to the edges of the tube, thereby eliminating the need for a separate heat supply. Instead of being of rectangular cross-section, the strip could be extruded to any desired cross-sectional configuration; for example so that it conforms more closely to the shape of the groove.

Where a long tube is thus formed, it is cut into suitable lengths for forming tubular bodies 10 for individual cans. End members 14 can be seamed onto the tubular bodies 10, as described below. Cans made by this method have been found to withstand substantial internal pressure.

Various modifications may be made to the methods just described. For example, the strip 26 may be applied to a Y-shaped groove on the inside of the tube 10 instead of the outside. A seam formed in this manner has a narrower externally exposed seam and can more easily give a flush outer surface which can be post-printed if desired. The groove need not be Y-shaped, but could have other profiles, or for example be a simple rectangular shape formed by bringing two non-chamfered edges towards each other. The method may be used to form a seam in a spirally wound tubular body instead of a longitudinal seam. Other materials can be used apart from foamed plastics, for example filled plastics materials such as Kartothene (Registered Trade Mark), or coated, laminated or co-extruded plastics materials, which may or may not have a foamed component and might have an aluminium layer. The cans formed can be used for packaging a wide range of goods such as powders (e.g. dried milk, instant potato), liquids such as oil or paint, other foods normally packaged in metal cans, or carbonated drinks. The cans may also be used as outer casings for batteries etc.

Referring now to Figs. 4 and 5; a tubular body 10 for a can is formed from foamed plastics material as described above. The material may for example be chalk-filled polypropylene having a thickness of 1200 microns and comprising 40% chalk and 60% polypropylene. An outward peripheral bead 12 is formed in one end of the body 10 by conventional methods and provides a shoulder for retaining a metal end member as described below. A metal end member 14 for the can has an upstanding wall 16 and fits inside the end of the body 10. The end member 14 has a radially extending peripheral flange 18, which is shown in its initial state in Fig. 4. As seen in Fig. 4, an edge portion 20 of the flange 18 is turned downwardly. The undersurface 22 of the flange 18 (nearest the bead 12) can be coated with a resinous material which forms a gasket as described later.

To seam the end member 14 onto the body 10, the flange 18 is crimped around the bead 12 to a position in which it is generally parallel with the tubular body 10, though as can be seen in Fig. 5 it is turned slightly inwards. During this operation, the edge portion 20 is turned back against the peripheral flange 18 to form a hem, and as the flange 18 is turned round a bead 12 the material of the body 10 underneath the bead is compressed between the hem and the upstanding wall 16, as shown in Fig. 5. The hem 20 is therefore securely retained behind the bead 12. In addition, during the crimping operation the upstanding wall 16 is pushed radially outwardly slightly, into the thickness of the tubular body 10, thus ensuring that the bead 12 is firmly gripped. If resin is provided on the undersurface 22 of the flange 18, it flows to fill any void in the seam thus formed and forms a gasket to seal the seam.

As shown in Fig. 6, it is also possible to seam an end member 14 onto a tubular body 10 using this method without a preformed bead 12, the end member being retained by the hem and the wall 16 which compress the material of the body and thereby form a shoulder in the material just above the hem.

To form a can, end members 14 are seamed to the tubular body 10 at each end thereof. The form of the end member may of course vary, e.g. it may be annular and receive a press-in lid.

The tubular body 10 is formed from a sheet of foamed plastics material, two opposing edges of which are joined together in a longitudinal seam to form the tube as hereinbefore described. If the longitudinal seam were appreciably thicker than the sheet material of the body 10 it would be difficult to seam hermetically the end member 14 to the body 10 in the region of the longitudinal seam. The foregoing method of seaming can produce a longitudinal seam which is not appreciably thicker than the sheet material.

Referring now to Figs. 7 and 8; an alternative method for forming a longitudinal seam is described. A long tube 10 is formed somewhat similarly to the previous methods from a long web of foamed plastics material, but the opposing edge portions 40 of the web are brought together in overlapping relationship instead of edge-to-edge relationship. So that the seam thus formed is not appreciably thicker than the web, the overlapping edge portions are first reduced in thickness by rolling. Although the rolling could be done by cylindrical rollers, it is preferably performed as the two edge portions are being brought together by two rolls 30 which are rotatable in the direction shown about axles 32 and which have circumferential peaks and troughs 34. Pressure pads 36 are provided on the opposite sides of the edge portions, and when the edge portions are progressed past the rolls 30 they are reduced in thickness and longitudinal corrugations are formed in the reduced edge portions. The peaks and troughs 34 are so arranged on the two rolls 30 that the corrugations thus formed in the two edge portions co-operate with each other as can be seen in the detail in Fig. 8. When the edge portions are brought together, heat is applied either by a jet of hot gas, e.g. nitrogen, or by other means. Pressure is also applied. The edge portions are thus welded together. The rolls 30 have end stops 38 which help to guide the edge portions. When the tube is formed, it can be cut into individual can lengths as before. One advantage of this method is that because the longitudinal corrugations in the edge portions co-operate with each other it is very easy to ensure that there is no wander between the edge portions as they are brought together. This is particularly important if the tube is formed around a mandrel, because otherwise there will be a tendency for the tube to grip the mandrel tightly as the edges are brought together, and also helps to ensure that the end members 14 are a good fit on the tubular bodies when cans are being formed. In its simplest form, just one of the edge portions may be reduced in thickness, for example by chamfering, and the other edge portion is laid over it and sealed thereto as described above. The sheet material need not be of foamed plastics. The sheet 10 could be extruded in flat form, with the regions 40 of reduced thickness formed directly by the shape of the extrusion die. A single wide sheet could be extruded, with one or more additional reduced thickness regions intermediate the edges, the reduced thickness regions across the sheet being on alternate sides of the sheet, the wide sheet then being cut longitudinally midway along the intermediate reduced thickness regions to provide from the one wide sheet two or more sheets 10 having reduced thickness regions only along the edges.

CLAIMS:

1.      A method of seaming together two edge portions of plastics sheet by heat welding, characterised in that the edge portions of the sheet (10) are brought towards each other substantially edge-to-edge but with a small gap between them, and a strip (26) of a compatible plastics material is introduced into the groove thus formed, the strip being heated sufficiently to produce a weld between the edge portions and the strip and form the seam.

2.      A method according to claim 1 characterised in that the thickness of said edge portions is reduced prior to applying the strip, the strip extending over the areas (24) of reduced thickness.

3.      A method according to claim 2 characterised in that the edge portions are chamfered (24), thereby producing a groove of generally Y-section between the sheet edges.

4.      A method according to any one of the preceding claims characterised in that the seam is compressed (28) immediately after forming to cause the strip to conform to the shape of the groove and produce a substantially flush joint.

5.      A method according to any one of the preceding claims characterised in that the strip is extruded directly into the groove, the heat of the freshly extruded material being sufficient to weld it to the edge portions of the sheet.

6.      A method according to any one of claims 1 to 4 characterised in that a hot gas jet (30) is directed so as to impinge on the surfaces to be joined as the strip enters the groove.

7.      A method according to any one of the preceding claims characterised in that the sheet (10) comprises a foamed plastics material.

8.    A method according to claim 6 characterised in that both the sheet (10) and the strip (26) comprise a foamed plastics material.

9.    A method of forming a can from a tubular body of sheet material, in which an end member having an upstanding annular wall and an out-turned annular flange extending from the edge of the wall is placed over the end of the tubular body so that the upstanding wall fits closely within the tubular body, and turning the annular flange around the outside of the body to form a circumferential seam, characterised in that the tubular body (10) comprises a foamed plastics material which is not turned with the flange (18) of the end member (14) and said flange is turned so as to be retained behind a shoulder (12) formed in the outside surface of the end portion of the body.

10.    A method of seaming two edge portions of plastics sheet by sealing them together, characterised in that the thickness of one edge portion of the sheet (10) is reduced (40) on one side thereof and the other edge portion is laid over the reduced edge portion and sealed thereto.

FIG. 1

FIG. 2

FIG. 3

FIG. 4

FIG. 5

FIG. 6

FIG. 7

FIG. 8